# EUROPÄISCHE PATENTSCHRIFT

(11) **EP 3 780 645 B1**
(45) Veröffentlichungstag und Bekanntmachung des Hinweises auf die Patenterteilung: **18.06.2025**
(21) Anmeldenummer: 20189454.0
(22) Anmeldetag: 04.08.2020
(51) Int. Cl.: H04Q 9/00, G01D 4/00

(54) **VERFAHREN ZUR KOMMUNIKATION ZWISCHEN EINEM ENDGERÄT UND EINEM MOBILEN DATENSAMMLER ÜBER EINEN KURZSTRECKENFUNK-RECEIVER SOWIE KURZSTRECKENFUNK-RECEIVER**
METHOD FOR COMMUNICATION BETWEEN A TERMINAL AND A MOBILE DATA COLLECTOR VIA A SHORT DISTANCE RADIO RECEIVER, AND SHORT DISTANCE RADIO RECEIVER
PROCÉDÉ DE COMMUNICATION ENTRE UN TERMINAL ET UN COLLECTEUR DE DONNÉES MOBILE À L'AIDE D'UN RÉCEPTEUR RADIO DE COURTE PORTÉE AINSI QUE RÉCEPTEUR RADIO DE COURTE PORTÉE

(30) Priorität: 16.08.2019 DE 102019005736
(43) Veröffentlichungstag der Anmeldung: 17.02.2021
(73) Patentinhaber: Diehl Metering Systems GmbH, 90451 Nürnberg (DE)
(72) Erfinder: Joppich-Dohlus, Petra, 91080 Rathsberg (DE); Blank, Thomas, 91732 Merkendorf (DE); Schmitz, Stefan, 90455 Nürnberg (DE); Schmidt, Achim, 91367 Weißenohe (DE)
(74) Vertreter: Diehl Patentabteilung

(56) Entgegenhaltungen:
- US-A1- 2010 007 521
- US-A1- 2010 026 517
- US-A1- 2019 226 873
- MICHAEL RAC GMBH: "MBWBLUE Function DLL Manual (English)", 1 November 2017 (2017-11-01), XP055747803, Retrieved from the Internet <URL:http://www.michaelrac.com/download/MBWBLUE_FunctionDLL_Manual.pdf> [retrieved on 20201106]
- "Communication systems for meters and remote reading of meters -Part 4: Wireless meter readout (Radio meter reading for operation in SRD bands) ED - CEN", DRAFT PREN 13757-4 REV, CEN, 1 September 2011 (2011-09-01), pages 1 - 62, XP002700058

## Beschreibung

Die vorliegende Erfindung betrifft einerseits ein Verfahren zur Kommunikation zwischen einem ortsfest installierten Endgerät, insbesondere Verbrauchszähler, und einem mobilen Datensammler über einen Kurzstreckenfunk-Receiver gemäß dem Oberbegriff des Anspruchs 1. Des Weiteren betrifft die vorliegende Erfindung einen Kurzstreckenfunk-Receiver gemäß dem Oberbegriff des Anspruchs 14.

### Technologischer Hintergrund

Endgeräte eines Versorgungsnetzwerks, insbesondere Verbrauchszähler, z.B. für Wasser, Wärme, Gas sowie Energie, nutzen hinsichtlich der Kommunikation heutzutage in der Regel den sogenannten M-Bus. Der M-Bus ermöglicht eine flächendeckende Vernetzung von Fernauslesungen einer großen Anzahl von Wärmemengenzählern, Gaszählern, Wasserzählern und Energiezählern unterschiedlicher Hersteller. Es werden vergleichsweise kleine Datenmengen pro Verbrauchszähler in relativ großen Zeitabständen ausgelesen, wodurch vergleichsweise geringe Anforderungen an die Übertragungsrate und damit auch an den Energieverbrauch gestellt werden, da Zähler üblicherweise über ihre gesamte Lebensdauer mit einer einzigen Batterie mit elektrischer Energie versorgt werden. Die Kommunikation im M-Bus kann entweder drahtgebunden oder drahtlos erfolgen. Die drahtlose M-Bus-Kommunikation (''Wireless M-Bus") ist in der EuroNorm CEN/TC294 EN13757-4 näher geregelt. Der Wireless M-Bus erlaubt es, Zähler auszulesen, indem ein mobiler Datensammler durch das Versorgungsgebiet, in dem sich die Zähler befinden, fährt, und die Zählerstände einsammelt (Drive-By-Auslesung).

Gemäß der EN13757-4 gibt es unterschiedliche Betriebsarten bezüglich der Zählerauslesung über Funk. Die Betriebsart T (häufiger Sendebetrieb) sowie die Betriebsart C (Kompaktbetrieb) eignen sich insbesondere für ein Auslesen im Vorbeifahren eines Datensammlers. Hierbei überträgt das jeweilige Endgerät bzw. der Zähler ein sehr kurzes Telegramm (üblicherweise mit einer Länge von 3-8 ms) im Abstand weniger Sekunden, um ein Auslesen des Zählerstands während des Vorbeifahrens des Datensammlers zu ermöglichen. Sobald der Datensammler ein Telegramm vom Zähler empfangen hat, wird eine bidirektionale Kommunikationsstruktur gemäß der EN13757-4 aufgebaut. Das Problem besteht hierbei jedoch darin, dass aufgrund der Zeitdauer des Kommunikationsaufbaus der Datensammler lediglich mit sehr geringer Geschwindigkeit an dem betreffenden Zähler vorbeifahren darf. Andernfalls besteht die Gefahr, dass eine Kommunikation fehlschlägt. Wird das erste Empfangsfenster nicht getroffen, hat der Datensammler keine Möglichkeit mehr mit dem Zähler zu kommunizieren. Denn der Zähler sendet erst nach einigen Sekunden, z. B. nach 10 Sek., wieder. Erst dann besteht wieder die Möglichkeit einer Kommunikation. Für eine Drive-By-Auslesung genügt dies nicht.

### Druckschriftlicher Stand der Technik

Aus der Broschüre MBWBLUE der Michael Rac GmbH, Ansbach, Deutschland ist ein tragbarer bidirektionaler Funktransceiver mit Bluetooth^{®} Schnittstelle für Wireless M-Bus Verbrauchszähler bekannt. Dieser Funktransceiver wird zum mobilen Empfang von M-Bus Funkverbrauchszähler-Telegrammen und deren Weiterübertragung an einen tragbaren Computer über eine Bluetooth Schnittstelle eingesetzt. Für den Empfang von Daten eines Verbrauchszählers im sogenannten Drive-By-Betrieb wird entsprechend dem Wireless M-Bus mit einem in Reichweite befindlichen Verbrauchszähler zunächst eine bidirektionale Kommunikationsstruktur aufgebaut. Der Funktransceiver sendet ein konfiguriertes Funktelegramm, wenn er ein Funktelegramm vom betreffenden Verbrauchszähler empfangen hat. Das Problem bei diesem Funkempfänger besteht darin, dass für ein mobiles Auslesen von Verbrauchszählern eine erhöhte Wahrscheinlichkeit vorherrschen muss, dass eine Nachricht des Funkempfängers an den Verbrauchszähler auch dessen erstes Empfangsfenster trifft. Eine erhöhte Wahrscheinlichkeit ist jedoch nur bei einer sehr geringen Drive-By-Geschwindigkeit gegeben.

Die US 2010/0007521 A1 betrifft eine Kommunikation zwischen einem Endgerät und einem Empfänger mittels AM und FM-Kommunikation.

### Aufgabe der vorliegenden Erfindung

Die Aufgabe der vorliegenden Erfindung besteht darin, eine bidirektionale Kommunikation zwischen Datensammler und Verbrauchszählern bei höheren Drive-By-Geschwindigkeiten zu ermöglichen.

### Lösung der Aufgabe

Die vorstehende Aufgabe wird bei dem gattungsgemäßen Verfahren durch die Merkmale des Anspruchs 1 sowie bei dem gattungsgemäßen Kurzstreckenfunk-Receiver durch die Merkmale des Anspruchs 15 gelöst. Zweckmäßige Ausgestaltungen der jeweiligen Erfindung sind in den abhängigen Ansprüchen beansprucht.

Gemäß der Erfindung ist vorgesehen, dass vom Kurzstreckenfunk-Receiver die Empfangszeit, zu der die Nachricht beim Receiver eintrifft, bestimmt und der Receiver nachdem er das Kommando oder die Kommandosequenz vom Datensammler empfangen hat, den Zeitpunkt der Weiterübertragung des Kommandos oder der Kommandosequenz an das Endgerät derart festlegt, dass der Empfang des Kommandos oder der Kommandosequenz durch das Endgerät innerhalb eines Empfangsfensters oder mehrerer Empfangsfenster stattfindet. Insbesondere wird ein Kommando in einem Empfangsfenster übertragen. Hierdurch wird der Receiver oder der Datensammler in die Lage versetzt, zu errechnen, wann das nächste Empfangsfenster des Endgeräts sein wird. Der Receiver ist deshalb in der Lage, die Übertragung von Kommandos vom Datensammler zum Endgerät genau auf die Lage der Empfangsfenster des Endgeräts festzulegen.

Erfindungsgemäß wird hierzu die festgestellte Empfangszeit vom Receiver an den Datensammler weiterübertragen oder der Receiver speichert die Empfangszeit, überträgt sie also nicht weiter, und ordnet diese beim Empfang eines Kommandos oder einer Kommandosequenz vom Datensammler anhand einer Identifikation (z. B. anhand der Zähleradresse) zu.

Insbesondere wird hierdurch die Möglichkeit eröffnet, dass der Empfang eines Kommandos oder einer Kommandosequenz vom Receiver durch das Endgeräte bereits innerhalb des Empfangsfensters stattfindet, welches vom Endgerät als erstes auf die unmittelbar vorausgehend vom Receiver empfangene Nachricht geöffnet wird. Es handelt sich hierbei sozusagen um das ''erstmögliche" Empfangsfenster für den Aufbau der Kommunikation. Daraus resultiert der Vorteil, dass der Kommunikationsaufbau sehr viel frühzeitiger als bisher erfolgen kann, was wiederum zur Folge hat, dass sich der Datensammler mit einer höheren Geschwindigkeit an dem betreffenden Endgerät vorbei bewegen kann.

Zweckmäßigerweise werden vom Receiver zusätzlich zur Empfangszeit auch die Metadaten der Nachricht vom Endgerät bestimmt und an den Datensammler weiterübertragen. Die Bestimmung der Metadaten ist zusätzlich vorteilhaft in Bezug auf die Errechnung der Position des Empfangsfensters des Endgeräts durch den Receiver oder den Datensammler.

Bei den Metadaten kann es sich vorzugsweise um eine Signalstärke und/oder einen besonderen Sendemodus, insbesondere um den Sendemodus T oder den Sendemodus C oder eine bidirektionale Unterbetriebsart dieser Sendemodi, und/oder ein Frame-Format und/oder eine Kommandogültigkeitszeit handeln. Diese Metadaten sind einzeln sowie in ihrer Kombination vorteilhaft in Bezug auf die Errechnung der Lage des Empfangsfensters des Endgeräts durch den Receiver oder Datensammler.

Dementsprechend kann der Receiver oder der Datensammler anhand der Empfangszeit sowie der Metadaten eine Lage des nächsten Empfangsfensters bestimmen.

Zweckmäßigerweise kann gemäß der vorliegenden Erfindung weiterhin vorgesehen sein, dass die Empfangszeit und/oder die Metadaten zusammen mit der ersten, vom Receiver empfangenen Nachricht an den Datensammler weiterübertragen wird bzw. werden. Der Datensammler erhält damit sehr schnell zusammen mit der Nachricht des Endgeräts diese weiteren Informationen. Der Datensammler prüft nach Erhalt der Informationen, ob ein Kommando für das betreffende Endgerät in seinem Kommando-Puffer vorliegt. Der Datensammler erzeugt dann die Daten, die zum Durchführen des Kommandos notwendig sind (z.B. Applikationsdaten, Verschlüsselung der Daten auf der Applikationsschicht oder Transportschicht) und schickt diese Daten zurück zum Receiver. Ferner sendet der Datensammler, vorzugsweise mit den vorgenannten Daten, die Empfangszeit sowie die Metadaten, aus denen der Receiver das nächste Empfangsfenster bestimmen kann.

Alternativ ist es auch möglich, dass der Datensammler selbst die Lage des Empfangsfensters des Endgeräts berechnet und an den Receiver übermittelt. Der Receiver kann in Kenntnis des Empfangsfensters die Kommandos bzw. Kommandoframes über die primäre Schnittstelle so zum Endgerät senden, dass dessen Empfangsfenster getroffen wird. Hierdurch ist ein sehr schneller Aufbau der Kommunikation zum Endgerät möglich.

Gemäß einer weiteren zweckmäßigen Ausgestaltung der vorliegenden Erfindung kann anstelle eines Kommandos oder einer Kommandosequenz vom Receiver zunächst ein Dummy-Kommando zum Zeitpunkt des festgestellten Empfangsfensters gesendet werden. Hierdurch kann für den Fall, dass der Datensammler für die Erzeugung der echten Kommandodaten noch etwas mehr Zeit benötigen sollte, nichtsdestotrotz bereits die Kommunikation aufgebaut werden, also das erste oder die ersten Empfangsfenster des Endgeräts für den Aufbau der Kommunikation genutzt werden. Die Kommunikation zum Endgerät durch den Receiver kann so lange mit einem Dummy-Kommando oder mit Dummy-Kommandos gehalten werden, bis "echte Kommandodaten" vom Datensammler erzeugt worden sind und zum Receiver gesendet werden können. Ab diesem Zeitpunkt beendet der Receiver das Aussenden der Dummy-Kommandos und ersetzt diese durch "echte Kommandos".

Insbesondere kann die Übertragung von Dummy-Kommandos über nacheinander geöffnete Empfangsfenster so lange wiederholt werden, bis das Kommando oder die Kommandosequenz vom Datensammler erzeugt worden ist und über das nächste Empfangsfenster gesendet werden kann.

Vorzugsweise kann das Dummy-Kommando vom Datensammler erzeugt und an den Receiver übertragen werden oder der Receiver erhält lediglich eine entsprechende Nachricht vom Datensammler und generiert daraufhin ein Dummy-Kommando selbst.

Gemäß einer weiteren zweckmäßigen Ausgestaltung übermittelt der Datensammler Kommandos, die zu einer Kommandosequenz gehören, mit einer einzigen Nachricht an den Receiver. Ferner kann der Kurzstreckenfunk-Receiver Kommandos, die zu einer Kommandosequenz gehören, vorzugsweise zusammen mit einer Ablaufinformation, mit einer einzigen Nachricht an den Datensammler übermitteln. Hierdurch kann der Umfang der Kommunikation über den Receiver reduziert werden, wodurch die Informationsverarbeitung im Datensammler sowie im Receiver vereinfacht werden kann.

Vorzugsweise ist die Zeitspanne, innerhalb welcher das Endgerät nach Aussendung der Nachricht das Empfangsfenster öffnet, umschaltbar, derart, dass im Endgerät erst eine erste längere Zeitspanne und anschließend eine zweite kürzere Zeitspanne generierbar ist, wobei nach Empfang eines ersten Kommandos durch das Endgerät von der ersten längeren Zeitspanne auf die zweite kürzere Zeitspanne umgeschaltet wird und die weitere Kommunikation bis zum Ende der Kommandosequenz unter Beibehaltung der zweiten kürzeren Zeitspanne erfolgt. Hierdurch kann das Durchführen einer Kommandosequenz beschleunigt werden.

Zweckmäßigerweise handelt es sich bei dem Kurzstreckenfunk-Receiver um einen WPAN-Receiver, vorzugsweise um einen Bluetooth^{®}-Receiver oder um einen vergleichbaren Receiver mit einer Reichweite bis zu 100 m, vorzugsweise bis zu 300 - 500 m.

Das erfindungsgemäße Verfahren ermöglicht es, eine bidirektionale Kommunikation wirkungsvoll aufzubauen, während der Datensammler das Endgerät entlang eines Weges mit einer Geschwindigkeit von mindestens 40 km/h, vorzugsweise von mindestens 45 km/h, besonders vorzugsweise von mindestens 50 km/h passiert.

Die vorliegende Erfindung betrifft des Weiteren einen Kurzstreckenfunk-Receiver, vorzugsweise einen WPAN-Receiver, besonders vorzugsweise einen Bluetooth^{®}-Receiver, gemäß dem Oberbegriff des Anspruchs 14. Zur Lösung der erfindungsgemäßen Aufgabe ist der Kurzstreckenfunk-Receiver derart hergerichtet, dass er gemäß einem Verfahren nach mindestens einem der vorgehenden Ansprüche betreibbar ist.

### Beschreibung der Erfindung anhand von Ausführungsbeispielen

Zweckmäßige Ausgestaltungen der vorliegenden Erfindung werden anhand von Zeichnungsfiguren näher erläutert. Diese zeigen:
- Fig. 1: eine stark vereinfachte schematische Darstellung des Auslesens von Endgeräten mittels eines mobilen Datensammlers;
- Fig. 2: eine stark vereinfachte schematische Darstellung der Schnittstellen zwischen Endgerät, Kurzstreckenfunk-Receiver sowie Datensammler gemäß der vorliegenden Erfindung;
- Fig. 3: eine erste Ausgestaltung des erfindungsgemäßen Verfahrens zum Kommunikationsaufbau eines sich bewegenden Datensammlers über einen Kurzstreckenfunk-Receiver mit einem ortsfest installierten Endgerät;
- Fig. 4: eine weitere Ausgestaltung eines Verfahrens zum Kommunikationsaufbau eines sich bewegenden Datensammlers über den Kurzstreckenfunk-Receiver mit einem ortsfest installierten Endgerät; sowie

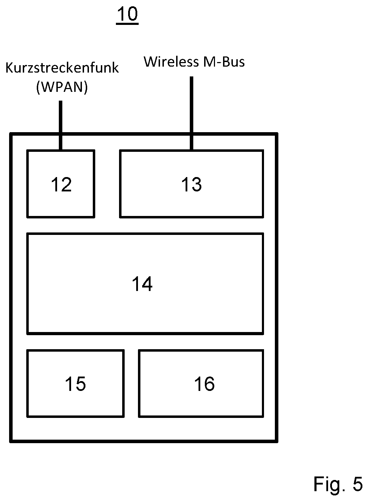

- Fig. 5: eine stark vereinfachte schematische Darstellung des Kurzstreckenfunk-Receivers gemäß der vorliegenden Erfindung.

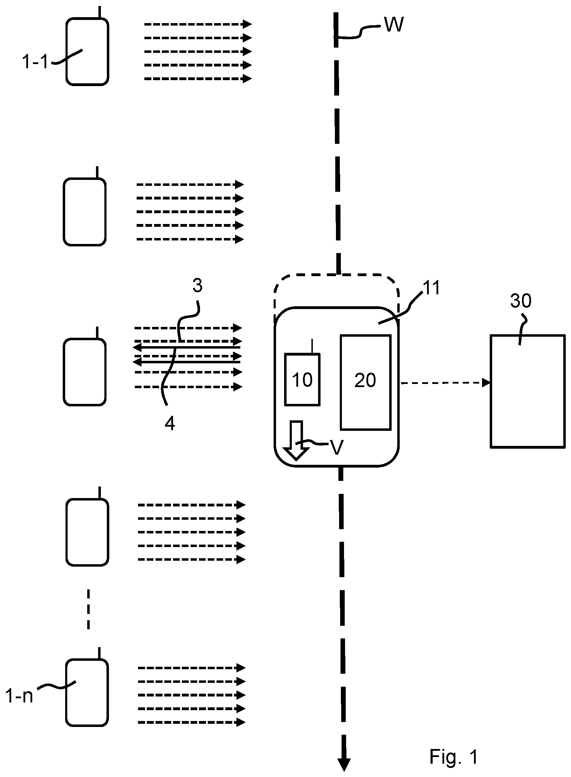

Fig. 1 zeigt eine Mehrzahl von Endgeräten 1-1, 1-n, bei denen es sich um ortsfest installierte Zähler, insbesondere für Wasser, Gas, Wärme oder Energie, handeln kann. Die Endgeräte 1-1, 1-n werden im sogenannten Wireless M-Bus gemäß EN13757-4 betrieben. Sie erlauben daher ein drahtloses also über Funk stattfindendes Auslesen ihrer Zählerstände mittels eines Datensammlers 20, welcher seinerseits die ausgelesenen Daten an ein Head-End 30 weiterübermittelt. Die Übermittlung an das Head-End 30 erfolgt vorzugsweise über das WAN-Netz, insbesondere über das Internet. In dem Head-End 30 werden die Zählerdaten weiterverarbeitet bzw. verwaltet.

Die Endgeräte 1-1, 1-n werden vorzugsweise in der Betriebsart T bzw. C betrieben. Bei diesen Betriebsarten übertragen die Endgeräte 1-1, 1-n jeweils eine sehr kurze, üblicherweise 3-8 ms lange Nachricht 3 oder Telegramm, um ein Auslesen des Zählerstands im Vorbeigehen und/oder Vorbeifahren zu ermöglichen. Diese Nachrichten 3 werden von dem jeweiligen Endgerät 1-1, 1-n permanent beispielsweise mit einem Abstand von wenigen Sekunden, beispielsweise mit einem Abstand von 8 s, ausgesendet (siehe gestrichelte Pfeile). Wird eine entsprechende Nachricht 3 vom Datensammler 20 empfangen, kann eine Kommunikation aufgebaut werden, indem ein Kommando oder eine Kommandosequenz 4 vom Datensammler 20 an das betreffende Endgerät 1-1, 1-n rückübertragen wird bzw. werden. Im Rahmen dieser Kommunikation werden die Zählerdaten an Datensammler 20 übermittelt.

Bei dem Datensammler 20 handelt es sich um einen mobilen Datensammler, welcher entlang eines Weges W mit einer Geschwindigkeit V sich an den einzelnen Endgeräten 1-1, 1-n vorbeibewegt und dafür vorgesehen ist, im Vorbeifahren die Zählerstände einzusammeln. Hierzu ist der Datensammler 20 mit einem fahrbaren Untersatz 11 versehen. Bei dem fahrbaren Untersatz 11 kann es sich um einen Pkw, Lkw oder dergleichen handeln. Beispielsweise kann ein entsprechender Datensammler 20 in einem das betreffende Wohngebiet regelmäßig passierenden Fahrzeug untergebracht sein. Geeignet hierfür sind regelmäßig fahrende Müllentsorgungsfahrzeuge, Busse oder dergleichen.

Bei dem Datensammler 20 handelt es sich üblicherweise um ein Standardgerät in Form eines PCs, Notebooks oder Smartphones.

Des Weiteren ist ein Kurzstreckenfunk-Receiver 10 dazu vorgesehen, die Nachrichten 3 bzw. Telegramme der Endgeräte 1-1, 1-n zu empfangen und an den Datensammler 20 weiterzugeben bzw. Kommandos bzw. Kommandosequenzen 4 vom Datensammler 20 zu empfangen und diese an das jeweilige Endgerät 1-1, 1-n weiter zu übertragen. Der Kurzstreckenfunk-Receiver 10 ist in der Lage, die Nachrichten 3 bzw. Telegramme vom Endgerät 1-1, 1-n in Echtzeitanforderung, d.h. zeitgenau, im ms-Bereich zu empfangen und Kommandos bzw. Kommandosequenzen 4 dementsprechend an das Endgerät 1-1, 1-n zu senden.

Hierzu muss das jeweilige Endgerät 1-1, 1-n neben einem Kommunikationsmodul für Wireless M-Bus auch ein entsprechendes Kurzstreckenfunk-Modul 12 aufweisen.

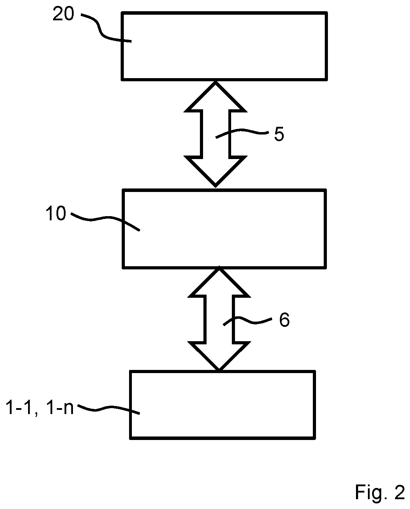

Aus Fig. 2 ist ein Beispiel einer entsprechenden Kommunikationsstruktur schematisch ersichtlich. Zwischen dem Datensammler 20 und dem Kurzstreckenfunk-Receiver 10 ist eine bidirektionale Kurzstreckenfunk-Schnittstelle 5 vorgesehen. Zwischen dem Kurzstreckenfunk-Receiver 10 und dem jeweiligen Endgerät 1-1, 1-n ist eine bidirektionale primäre Schnittstelle 6 bzw. Kurzstreckenfunk-Schnittstelle vorgesehen.

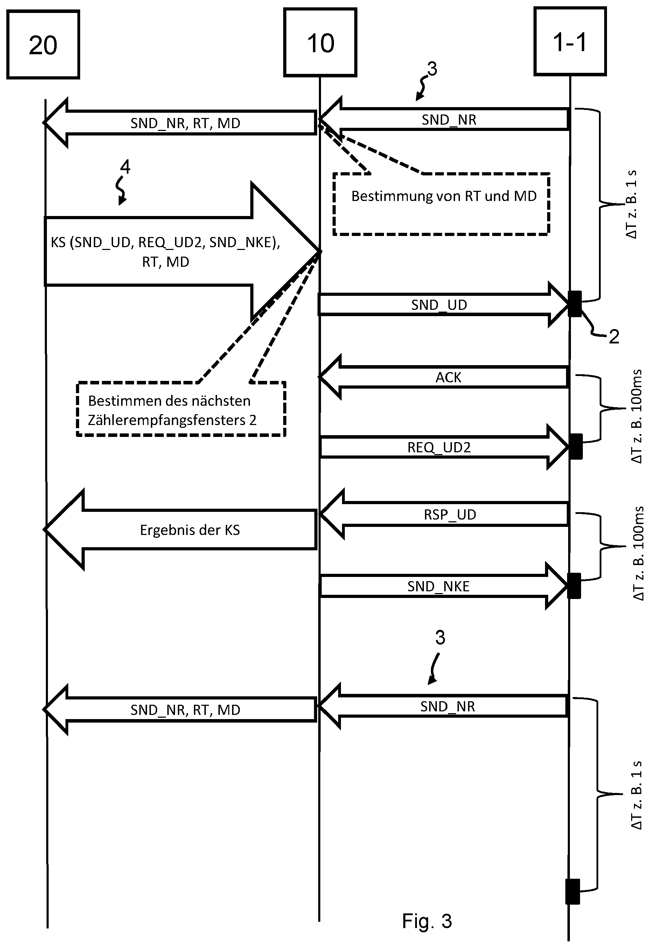

Fig. 3 zeigt ein Beispiel einer zweckmäßigen Ausgestaltung des erfindungsgemäßen Kommunikationsaufbaus anhand eines Datenaustausches zwischen dem Endgerät 1-1, dem Kurzstreckenfunk-Receiver 10 sowie dem Datensammler 20 entlang der Zeitachse (Vertikale in Fig. 3). Bei der Nachricht 3 in Fig. 3 handelt es sich um eine periodisch, unaufgefordert ausgesendete Nachricht des Endgeräts 1-1 (Telegramm SND_NR). Diese Nachricht wird vom Kurzstreckenfunk-Receiver 10 empfangen, wobei der Empfangszeitpunkt RT sowie vorzugsweise auch die Metadaten MD vom Kurzstreckenfunk-Receiver 10 bestimmt werden und sogleich an den Datensammler 20 weiterübertragen werden.

Bei den Metadaten MD handelt es sich insbesondere um die Signalstärke, den Sendemodus (T-Modus oder C-Modus oder Untermodus davon), das Frame-Format (M-Bus Frame-Format: A oder B) und/oder die Kommandogültigkeitszeit.

Der Datensammler 20 prüft anschließend, ob ein Kommando oder eine Kommandosequenz 4 für das Endgerät 1-1 in seinem Puffer vorliegt. Dann erzeugt der Datensammler 20 die Daten, die zum Durchführen des Kommandos oder der Kommandosequenz 4 notwendig sind (z.B. Applikationsdaten, Verschlüsselung der Daten auf Applikationsschicht oder Transportschicht) und schickt diese als Kommandosequenz KS zum Kurzstreckenfunk-Receiver 10.

Bei der in Fig. 3 dargestellten Kommandosequenz 4 handelt es sich um die Kommandos SND_UD, REQ_UD2, SND_NKE einschließlich den Empfangszeitpunkt RT sowie die Metadaten MD. Bei den Kommandos der Kommandosequenz 4 handelt es sich um standardisierte Kommandos der EN13757-4. Dementsprechend werden zusammen mit der Kommandosequenz 4 der Zeitpunkt RT des Empfangs der Nachricht 3 sowie die Metadaten MD an den Kurzstreckenfunk-Receiver 10 rückübertragen. Es ist nun möglich, dass der Kurzstreckenfunk-Receiver 10 aus den vorliegenden Daten die Lage des nächsten Empfangsfensters 2 des Endgeräts 1-1 bestimmt, welches in Fig. 1 in einer Zeitspanne ΔT von z.B. 1 s nach Versenden der Nachricht 3 geöffnet wird. Der Kurzstreckenfunk-Receiver 10 ist damit in der Lage, das Kommando SND_UD (Send User Data) an das Endgerät 1-1 zeitgenau innerhalb des Empfangsfensters 2 zu übertragen.

Darüber hinaus ist der Kurzstreckenfunk-Receiver 10 in der Lage, das nächste Empfangsfenster 2 des Endgeräts 1-1 anhand der ihm vorliegenden Daten zu bestimmen. Erhält der Kurzstreckenfunk-Receiver 10 somit die Bestätigung (ACK) vom Endgerät 1-1, übermittelt er im nächsten Empfangsfenster 2 das Kommando REQ_UD2, worauf das Endgerät 1-1 mit der Nachricht RSP_UD antwortet und die Zählerdaten (Frames) übertragen werden. Vom Kurzstreckenfunk-Receiver 10 werden die Zählerdaten (Frames) sowie das Ergebnis der Kommandostruktur (KS) an den Datensammler 20 übertragen. Mit dem Kommando SND_NKE wird die Kommunikation zwischen Endgerät 1-1, 1-n und Datensammler beendet.

In einer alternativen Ausgestaltung ist es auch möglich, dass die Lage des jeweiligen Empfangsfensters 2 anhand des Empfangszeitpunkts RT im Datensammler 20 bestimmt und diese Information an den Kurzstreckenfunk-Receiver 10 zurückgegeben wird, sodass dieser die Information erhält, wann genau er das jeweilige Kommando absenden muss.

Nach dem Kommando SND_UD schaltet aufgrund der Bestimmung der Lage des ersten Empfangsfensters 2 das Endgerät 1-1 von einem Slow-Response-Delay-Mode (Bildung des Empfangsfensters nach ΔT z.B. 1 s) in den sogenannten Fast-Response-Delay-Mode (Bildung eines Empfangsfensters nach ΔT z.B. 100 ms). Der Kurzstreckenfunk-Receiver 10 ist bei dem in Fig. 3 gezeigten Ablaufbeispiel in der Lage, im Fast-Response-Delay-Mode zum ersten Empfangsfenster 2 das Kommando REQ_UD2 zu senden.

Nach dem Empfang des letzten Kommandos SND_NKE innerhalb des Empfangsfensters 2 im Fast-Response-Delay-Mode wird die Kommunikation durch das Kommando SND_NKE geschlossen. Bei der nächsten Nachricht 3 stellt das Endgerät 1-1 wieder auf den Slow-Response-Delay-Mode um. Das nächste Empfangsfenster 2 wird somit wieder innerhalb eines Zeitraums ΔT von z.B. 1 s nach Aussenden der Nachricht 3 erzeugt.

Auf diese Weise kann eine sehr rascher Aufbau der Kommunikation zwischen dem Endgerät 1-1 und dem Datensammler 20 sichergestellt werden.

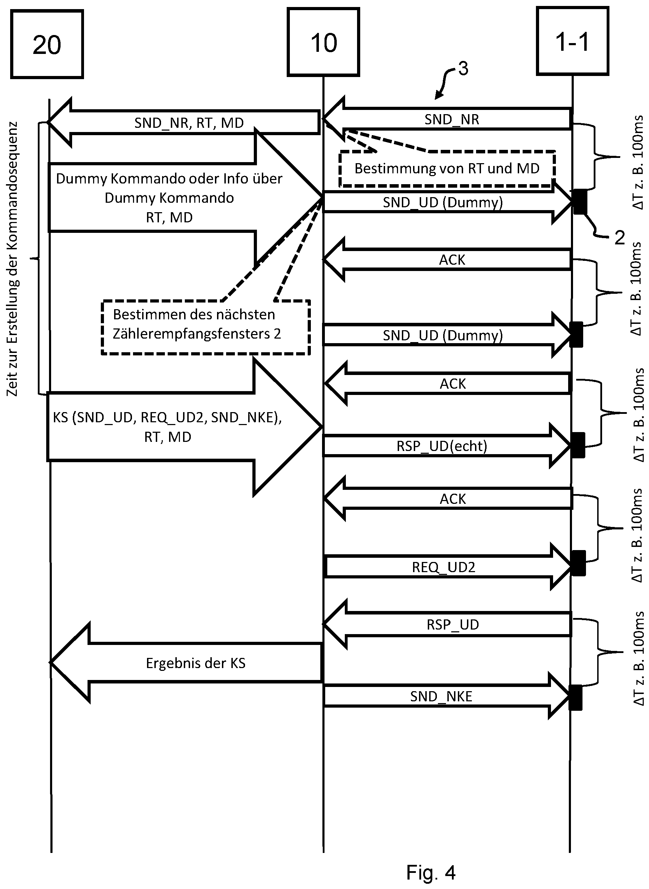

Bei der beispielhaften Ausgestaltung des Verfahrens gemäß Fig. 4 ist eine weitere Möglichkeit des Aufbaus der Kommunikation gemäß der Erfindung möglich für den Fall, dass zum ersten Empfangsfenster 2 die Kommandosequenz KS noch nicht erstellt ist. Der Datensammler 20 empfängt die Nachricht 3 zusammen mit dem Empfangszeitpunkt RT sowie den Metadaten MD und stellt hierbei fest, dass für das Endgerät 1-1 die Kommandosequenz KS noch nicht vorliegt, das Empfangsfenster 2 nach der Nachricht 3 jedoch sehr kurzzeitig nach dessen Aussendung geöffnet wird (ΔT z.B. 100 ms).

In diesem Fall sendet der Kurzstreckenfunk-Receiver 10 im ersten Empfangsfenster 2 nach der Nachricht 3 zunächst ein sogenanntes Dummy-Kommando (SND_UD(Dummy)). Bei dem Dummy-Kommando handelt es sich um einen leeren Befehl. Das Dummy-Kommando kann bereits im Datensammler 20 erzeugt werden und an den Kurzstreckenfunk-Receiver 10 übermittelt werden. Alternativ kann statt des Dummy-Kommandos lediglich eine Info über die Notwendigkeit eines Dummy-Kommandos an den Kurzstreckenfunk-Receiver 10 übermittelt werden. Das Dummy-Kommando dient dazu, die Kommunikation zwischen dem Kurzstreckenfunk-Receiver 10 und dem Endgerät 1-1 möglichst schnell aufzubauen und dafür das erste Empfangsfenster 2 zu nutzen. Der Datensammler 20 gewinnt hierdurch Zeit für die Erzeugung der echten Kommandodaten. Die Übermittlung eines Dummy-Kommandos wird so lange fortgesetzt, bis die echte Kommandostruktur vorliegt und die einzelnen Kommandos entsprechend der Ausgestaltung gemäß Fig. 3 in den jeweiligen Empfangsfenstern 2 übertragen werden können.

Wie aus Fig. 3 und 4 ersichtlich ist, gibt der Datensammler 20 die Kommandos (z.B. SND_UD, REQ_UD2, SND_NKE), die zu einer Kommandosequenz gehören, mit einer einzigen Nachricht zum Kurzstreckenfunk-Receiver 10 weiter. Ebenso gibt der Kurzstreckenfunk-Receiver 10 Kommandos, die zu einer Kommandosequenz KS gehören, vorzugsweise einschließlich der Zählerdaten, mit einer einzigen Nachricht an den Datensammler 20 weiter. Hierdurch kann eine reduzierte Kommunikation über die Schnittstelle des Kurzstreckenfunk-Receivers 10 erreicht werden. Der Kurzstreckenfunk-Receiver 10 bzw. der Datensammler 20 müssen nicht einzelne Kommandos bzw. die Antwort auf ein Kommando einer laufenden Kommunikation abarbeiten. Hierdurch ist die Bearbeitung im Datensammler 20 sowie im Kurzstreckenfunk-Receiver 10 einfacher.

Zweckmäßigerweise kann ein Endgerät 1-1, 1-n, welches z.B. im T2-Modus arbeitet, sein Empfangsfenster im Slow-Response-Delay-Mode nach z.B. ΔT 1 s öffnen und nach Aussendung der Nachricht 2 in den Fast-Response-Delay-Mode (z.B. ΔT 100 ms) umschalten, wie dies aus Fig. 3 ersichtlich ist. Die weitere Kommunikation bis zum Ende der Sequenz wird anschließend im Fast-Response-Delay-Mode durchgeführt. Hierdurch kann die Durchführung einer Kommandosequenz beschleunigt werden.

Bei dem Kurzstreckenfunk-Receiver 10 handelt es sich um ein tragbares Gerät, welches über einen Prozessor 14, einen Speicher 15 sowie eine autarke Energieversorgung 16, vorzugsweise einem Akku oder einer Batterie, verfügt. Darüber hinaus besitzt der Kurzstreckenfunk-Receiver 10 ein mit einer Antenne ausgestattetes Kurzstreckenfunk-Modul 12 sowie ein Kommunikationsmodul 13 für Wireless M-Bus mit einer Antenne. Die Kommunikationsschnittstelle zwischen dem Kurzstreckenfunk-Receiver 10 und dem Datensammler 20 ist schnurlos.

Bei dem Kurzstreckenfunk-Receiver 10 bzw. WPAN-Receiver handelt es sich vorzugsweise um einen Receiver mit einer Reichweite von ca. 50-100 m. Insbesondere kann hierfür ein Bluetooth^{®}-Receiver vorgesehen sein. Die Schnittstelle 5 ist für diesen Fall als Bluetooth^{®}-Schnittstelle sowie das Modul 12 als Bluetooth^{®}-Modul ausgestattet.

Die vorliegende Erfindung ermöglicht einen wirksamen Kommunikationsaufbau zwischen einem Datensammler 20 und einem Endgerät 1-1, 1-n bei einem vorbeibewegten Datensammler 20 mit einer Geschwindigkeit von mindestens 40 km/h, vorzugsweise mindestens 45 km/h, besonders vorzugsweise mindestens 50 km/h.

Die vorliegende Erfindung gewährleistet daher erhebliche Vorteile gegenüber dem bisher bestehenden Stand der Technik in Bezug auf das Problem eines möglichst schnellen Kommunikationsaufbaus zwischen einem bewegten Datensammler 20 und einem ortsfest installierten Endgerät 1-1, 1-n.

### BEZUGSZEICHENLISTE

- 1: Endgerät
- 2: Empfangsfenster
- 3: Nachricht
- 4: Kommando oder Kommandosequenz
- 5: Kurzstreckenfunk-Schnittstelle
- 6: primäre Schnittstelle
- 10: Kurzstreckenfunk-Receiver
- 11: fahrbarer Untersatz
- 12: Kurzstreckenfunk-Modul
- 13: Kommunikationsmodul für Wireless M-Bus
- 14: Prozessor
- 15: Speicher
- 16: Energieversorgung
- 20: Datensammler
- 30: Head-End

- ΔT: Zeitspanne
- RT: Empfangszeit
- KS: Kommandosequenz
- MD: Metadaten

## Patentansprüche

1. Verfahren zur Kommunikation zwischen einem ortsfest installierten Endgerät (1-1, 1-n), insbesondere Verbrauchszähler, sowie einem mobilen Datensammler (20) unter Anwendung eines Wireless M-Bus über einen Kurzstreckenfunk-Receiver (10), vorzugsweise einen WPAN-Receiver, der eine bidirektionale Schnittstelle zum im Empfangsbereich des Receivers (10) liegenden Endgerät (1-1, 1-n) aufbaut und die vom Endgerät (1-1, 1-n) empfangenen Daten über eine bidirektionale Kurzstreckenfunk-Schnittstelle an den Datensammler (20) weiterüberträgt,
wobei das Endgerät (1-1, 1-n) zum Kommunikationsaufbau periodisch und unaufgefordert eine Nachricht (3) aussendet und jeweils nach einer Zeitspanne (ΔT) anschließend ein Empfangsfenster (2) öffnet,
wobei als Antwort darauf ein Kommando oder eine Kommandosequenz (KS) vom mobilen Datensammler (20) an den Receiver (10) übermittelt wird, indem der Receiver (10) das Kommando oder die Kommandosequenz (KS) vom Datensammler (20) zunächst empfängt und in dem Empfangsfenster (2) an das Endgerät (1-1, 1-n) übermittelt, **dadurch gekennzeichnet, dass**
vom Receiver (10) die Empfangszeit (RT), zu der die Nachricht (3) beim Receiver (10) eintrifft, bestimmt wird,
vom Receiver (10) die Empfangszeit (RT) an den Datensammler (20) weiterübertragen wird oder der Receiver (10) die Empfangszeit (RT) speichert und diese beim Empfang eines Kommandos oder einer Kommandosequenz (KS) anhand einer Identifikation zuordnet, und
der Receiver (10), nachdem er das Kommando oder die Kommandosequenz (KS) einschließlich der Empfangszeit (RT) vom Datensammler (20) empfangen hat oder er das Kommando oder die Kommandosequenz (KS) vom Datensammler (20) empfangen hat, den Zeitpunkt der Weiterübertragung des Kommandos oder der Kommandosequenz (KS) an das Endgerät (1-1, 1-n) unter Berücksichtigung der Empfangszeit (RT) derart festlegt, dass der Empfang des Kommandos oder der Kommandosequenz (KS) durch das Endgerät (1-1, 1-n) innerhalb des Empfangsfensters (2) stattfindet.

2. Verfahren nach einem der vorhergehenden Ansprüche, **dadurch gekennzeichnet, dass**
der Empfang des Kommandos oder der Kommandosequenz (KS) vom Receiver (10) durch das Endgerät (1-1, 1-n) mit demjenigen Empfangsfenster (2) beginnt, welches vom Endgerät (1-1, 1-n) als erstes auf die unmittelbar vorausgehende und vom Receiver empfangene Nachricht (3) geöffnet wird.

3. Verfahren nach einem der vorhergehenden Ansprüche, **dadurch gekennzeichnet, dass**
vom Receiver (10) Metadaten (MD) genommen und an den Datensammler (20) weiterübertragen werden, wobei es sich bei den Metadaten (MD) insbesondere um
eine Signalstärke und/oder
einen Sendemodus, bevorzugt um den T-Modus oder C-Modus,
und/oder
ein Frame-Format, bevorzugt MS-Bus Frame-Format A oder B, und/oder eine Kommandogültigkeitszeit
handelt.

4. Verfahren nach Anspruch 3, **dadurch gekennzeichnet, dass**
der Receiver (10) oder der Datensammler (20) anhand der Empfangszeit (RT) und/oder der Metadaten (MD) eine Lage des Empfangsfensters (2) bestimmt.

5. Verfahren nach Anspruch 3 oder 4, **dadurch gekennzeichnet, dass** die Empfangszeit (RT) und/oder die Metadaten (MD) zusammen mit der Nachricht (3) vom Receiver (10) an den Datensammler (20) weiterübertragen wird bzw. werden.

6. Verfahren nach einem der vorhergehenden Ansprüche, **dadurch gekennzeichnet, dass** anstelle eines Kommandos oder einer Kommandosequenz (KS) vom Receiver (10) zum Endgerät (1-1, 1-n) zunächst ein Dummy-Kommando während des geöffneten Empfangsfensters (2) gesendet wird.

7. Verfahren nach Anspruch 6, **dadurch gekennzeichnet, dass**
die Übertragung von Dummy-Kommandos über nacheinander geöffnete Empfangsfenster (2) solange wiederholt wird, bis das Kommando oder die Kommandosequenz (KS) vom Datensammler (20) erzeugt worden ist und über das Empfangsfenster (2) gesendet werden kann.

8. Verfahren nach Anspruch 6 oder 7, **dadurch gekennzeichnet, dass**
das Dummy-Kommando vom Datensammler (20) erzeugt und an den Receiver (10) übertragen wird oder der Receiver (10) eine Nachricht vom Datensammler (20) erhält und daraufhin ein Dummy-Kommando generiert.

9. Verfahren nach einem der vorhergehenden Ansprüche, **dadurch gekennzeichnet, dass**
der Datensammler (20) Kommandos, die zu einer Kommandosequenz (KS), vorzugsweise zusammen mit der Empfangszeit (RT) und/oder der Metadaten (MD), gehören, mit einer einzigen Nachricht an den Receiver (10) übermittelt.

10. Verfahren nach einem der vorhergehenden Ansprüche, **dadurch gekennzeichnet, dass**
der Receiver (10) Kommandos, die zu einer Kommandosequenz (KS) gehören, vorzugsweise mit Ablaufinformation, mit einer einzigen Nachricht an den Datensammler (20) übermittelt.

11. Verfahren nach einem der vorhergehenden Ansprüche, **dadurch gekennzeichnet, dass**
die Zeitspanne (ΔT) umschaltbar ist, derart, dass im Endgerät (1-1, 1-n) eine erste längere Zeitspanne oder eine zweite kürzere Zeitspanne generierbar ist,
nach Empfang eines ersten Kommandos durch das Endgerät (1-1, 1-n) von der ersten längeren Zeitspanne auf die zweite kürzere Zeitspanne umgeschaltet wird und
die weitere Kommunikation bis zum Ende der Kommandosequenz unter Beibehaltung der zweiten Zeitspanne erfolgt.

12. Verfahren nach einem der vorhergehenden Ansprüche, **dadurch gekennzeichnet, dass**
es sich bei dem Receiver (10) um einen WPAN-Receiver, vorzugsweise um einen Bluetooth^{®}-Receiver, handelt.

13. Verfahren nach einem der vorhergehenden Ansprüche, **dadurch gekennzeichnet, dass** die bidirektionale Kommunikation erfolgt, während der Datensammler (20) das Endgerät (1-1, 1-n) mit einer Geschwindigkeit (V) von mindestens 40 Km/h, vorzugsweise von mindestens 45 Km/h, besonders vorzugsweise von mindestens 50 Km/h passiert.

14. Kurzstreckenfunk-Receiver (10) umfassend
ein Kommunikationsmodul (13) für Wireless M-Bus mit einer Antenne, ein Kurzstreckenfunk-Modul (12), vorzugsweise ein WPAN-Modul, einen Prozessor (14),
einen Speicher (15) sowie
eine Energiequelle (16), vorzugsweise in Form einer Batterie oder eines Akkus, **dadurch gekennzeichnet, dass**
der Kurzstreckenfunk-Receiver (10) derart hergerichtet ist, dass er gemäß einem Verfahren nach mindestens einem der vorhergehenden Ansprüche betreibbar ist.

## Claims

1. Method for communication between a terminal (1-1, 1-n) installed at a fixed location, in particular a consumption meter, and a mobile data collector (20), by using a Wireless M-Bus, via a short-range radio receiver (10), preferably a WPAN receiver, which sets up a bidirectional interface to the terminal (1-1, 1-n), which is situated in the reception range of the receiver (10), and transmits the data received from the terminal (1-1, 1-n) onward to the data collector (20) via a bidirectional short-range radio interface,
wherein the terminal (1-1, 1-n) sends a message (3) periodically and unprompted for the purpose of communication set-up and in each case subsequently opens a reception window (2) after a period of time (ΔT),
wherein in response thereto a command or a command sequence (KS) is conveyed from the mobile data collector (20) to the receiver (10) as the receiver (10) initially receives the command or the command sequence (KS) from the data collector (20) and conveys said command or command sequence to the terminal (1-1, 1-n) in the reception window (2), **characterized in that**
the receiver (10) determines the reception time (RT) at which the message (3) arrives at the receiver (10),
the receiver (10) transmits the reception time (RT) onward to the data collector (20), or the receiver (10) stores the reception time (RT) and assigns it on reception of a command or a command sequence (KS) on the basis of an identification, and
the receiver (10), after having received the command or the command sequence (KS), including the reception time (RT), from the data collector (20) or having received the command or the command sequence (KS) from the data collector (20), stipulates the time at which the command or the command sequence (KS) is transmitted onward to the terminal (1-1, 1-n) while taking into consideration the reception time (RT), such that the command or the command sequence (KS) is received by the terminal (1-1, 1-n) within the reception window (2).

2. Method according to one of the preceding claims,
**characterized in that**
reception of the command or the command sequence (KS) from the receiver (10) by the terminal (1-1, 1-n) begins with that reception window (2) that is first opened by the terminal (1-1, 1-n) for the immediately preceding message (3), received by the receiver.

3. Method according to one of the preceding claims,
**characterized in that**
the receiver (10) takes metadata (MD) and transmits them onward to the data collector (20), the metadata (MD) in particular being
a signal strength and/or
a transmission mode, in particular the T mode or C mode, and/or
a frame format, preferably MS-Bus frame format A or B, and/or a command validity period.

4. Method according to Claim 3, **characterized in that** the receiver (10) or the data collector (20) takes the reception time (RT) and/or the metadata (MD) as a basis for determining a position of the reception window (2).

5. Method according to Claim 3 or 4, **characterized in that** the reception time (RT) and/or the metadata (MD) is or are transmitted onward from the receiver (10) to the data collector (20) together with the message (3).

6. Method according to one of the preceding claims, **characterized in that** instead of a command or a command sequence (KS) a dummy command is initially sent from the receiver (10) to the terminal (1-1, 1-n) during the open reception window (2).

7. Method according to Claim 6, **characterized in that** the transmission of dummy commands over successively opened reception windows (2) is repeated until the command or the command sequence (KS) has been produced by the data collector (20) and can be sent over the reception window (2).

8. Method according to Claim 6 or 7, **characterized in that**
the dummy command is produced by the data collector (20) and transmitted to the receiver (10), or the receiver (10) receives a message from the data collector (20) and then generates a dummy command.

9. Method according to one of the preceding claims,
**characterized in that**
the data collector (20) conveys commands that belong to a command sequence (KS), preferably together with the reception time (RT) and/or the metadata (MD), to the receiver (10) with a single message.

10. Method according to one of the preceding claims,
**characterized in that**
the receiver (10) conveys commands that belong to a command sequence (KS), preferably with process information, to the data collector (20) with a single message.

11. Method according to one of the preceding claims,
**characterized in that**
the period of time (ΔT) is switchable such that a first longer period of time or a second shorter period of time is generable in the terminal (1-1, 1-n),
reception of a first command by the terminal (1-1, 1-n) is followed by a switch from the first longer period of time to the second shorter period of time, and
the further communication is effected up to the end of the command sequence while retaining the second period of time.

12. Method according to one of the preceding claims,
**characterized in that**
the receiver (10) is a WPAN receiver, preferably a Bluetooth^{®} receiver.

13. Method according to one of the preceding claims, **characterized in that** the bidirectional communication is effected while the data collector (20) passes the terminal (1-1, 1-n) at a velocity (V) of at least 40 km/h, preferably of at least 45 km/h, particularly preferably of at least 50 km/h.

14. Short-range radio receiver (10) comprising
a communication module (13) for Wireless M-Bus having an antenna,
a short-range radio module (12), preferably a WPAN module,
a processor (14),
a memory (15) and
an energy source (16), preferably in the form of a battery or a storage battery, **characterized in that**
the short-range radio receiver (10) is configured such that it is operable using a method according to at least one of the preceding claims.

## Revendications

1. Procédé de communication entre un terminal (1-1, 1-n), en particulier un compteur de consommation, installé de manière fixe, et un collecteur de données mobile (20) avec utilisation d'un Wireless M-Bus via un récepteur radio à courte distance (10), de préférence un récepteur WPAN, qui établit une interface bidirectionnelle avec le terminal (1-1, 1-n) se trouvant dans la zone de réception du récepteur (10) et retransmet au collecteur de données (20), via une interface radio bidirectionnelle à courte distance, les données reçues par le terminal (1-1, 1-n), le terminal (1-1, 1-n) émettant périodiquement et de manière non sollicitée un message (3) pour l'établissement de communication et ouvrant ensuite chaque fois après un intervalle de temps (ΔT) une fenêtre de réception (2),
en réponse à ce message, une commande ou une séquence de commandes (SC) étant transmise du collecteur de données mobile (20) au récepteur (10), en ce que le récepteur (10) reçoit d'abord du collecteur de données (20) la commande ou la séquence de commandes (KS) et la transmet dans la fenêtre de réception (2) au terminal (1-1, 1-n), **caractérisé en ce que**
l'heure de réception (RT) à laquelle le message (3) arrive au récepteur (10) est déterminée par le récepteur (10),
l'heure de réception (RT) est retransmise par le récepteur (10) au collecteur de données (20) ou le récepteur (10) mémorise l'heure de réception (RT) et l'affecte à l'aide d'une identification à la réception d'une commande ou d'une séquence de commandes (SC), et
le récepteur (10), après avoir reçu du collecteur de données (20) la commande ou la séquence de commandes (SC) y compris l'heure de réception (RT) ou après avoir reçu du collecteur de données (20) la commande ou la séquence de commandes (KS), fixe le moment de la retransmission de la commande ou de la séquence de commandes (SC) au terminal (1-1, 1-n) en tenant compte de l'heure de réception (RT), de manière que la réception de la commande ou de la séquence de commandes (SC) par le terminal (1-1, 1-n) ait lieu à l'intérieur de la fenêtre de réception (2).

2. Procédé selon l'une quelconque des revendications précédentes, **caractérisé en ce que**
la réception de la commande ou de la séquence de commandes (SC) du récepteur (10) par le terminal (1-1, 1-n) commence par la fenêtre de réception (2) qui est ouverte en premier par le terminal (1-1, 1-n) sur le message (3) immédiatement précédent et reçu par le récepteur.

3. Procédé selon l'une quelconque des revendications précédentes, **caractérisé en ce que**
des métadonnées (MD) sont prélevées par le récepteur (10) et retransmises au collecteur de données (20), les métadonnées (MD) consistant en particulier
en une force de signal et/ou
un mode d'émission, de préférence le mode T ou le mode C, et/ou
un format de trame, de préférence le format de trame MS-Bus A ou B, et/ou un temps de validité de commande.

4. Procédé selon la revendication 3, **caractérisé en ce que**
le récepteur (10) ou le collecteur de données (20) détermine à l'aide de l'heure de réception (RT) et/ou des métadonnées (MD) une position de la fenêtre de réception (2).

5. Procédé selon la revendication 3 ou 4, **caractérisé en ce que** l'heure de réception (RT) et/ou les métadonnées (MD) est ou sont retransmise(s), conjointement avec le message (3), par le récepteur (10) au collecteur de données (20).

6. Procédé selon l'une quelconque des revendications précédentes, **caractérisé en ce qu'**au lieu d'une commande ou d'une séquence de commandes (SC), une commande fictive est d'abord envoyée par le récepteur (10) au terminal (1-1, 1-n) pendant la fenêtre de réception (2) ouverte.

7. Procédé selon la revendication 6, **caractérisé en ce que**
la transmission de commandes fictives via des fenêtres de réception (2) ouvertes successivement est répétée jusqu'à ce que la commande ou la séquence de commandes (SC) ait été générée par le collecteur de données (20) et puisse être envoyée via la fenêtre de réception (2).

8. Procédé selon la revendication 6 ou 7, **caractérisé en ce que**
la commande fictive est produite par le collecteur de données (20) et transmise au récepteur (10) ou le récepteur (10) reçoit un message du collecteur de données (20) et génère ensuite une commande fictive.

9. Procédé selon l'une quelconque des revendications précédentes, **caractérisé en ce que**
le collecteur de données (20) transmet par un seul message au récepteur (10) des commandes qui font partie d'une séquence de commandes (SC), de préférence conjointement avec l'heure de réception (RT) et/ou les métadonnées (MD).

10. Procédé selon l'une quelconque des revendications précédentes, **caractérisé en ce que**
le récepteur (10) transmet par un seul message au collecteur de données (20) des commandes qui font partie d'une séquence de commandes (SC), de préférence avec des informations de déroulement.

11. Procédé selon l'une quelconque des revendications précédentes, **caractérisé en ce que**
l'intervalle de temps (ΔT) peut être inversé de manière que dans le terminal (1-1, 1-n) puisse être généré un premier intervalle de temps plus long ou un deuxième intervalle de temps plus court,
après réception d'une première commande, s'effectue l'inversion par le terminal (1-1, 1-n) du premier intervalle de temps plus long au deuxième intervalle de temps plus court et
la poursuite de la communication jusqu'à la fin de la séquence de commandes s'effectue avec maintien du deuxième intervalle de temps.

12. Procédé selon l'une quelconque des revendications précédentes, **caractérisé en ce que**
pour ce qui est du récepteur (10) il s'agit d'un récepteur WPAN, de préférence d'un récepteur Bluetooth^{®}.

13. Procédé selon l'une quelconque des revendications précédentes, **caractérisé en ce que** la communication bidirectionnelle s'effectue pendant que le collecteur de données (20) passe devant le terminal (1-1, 1-n) à une vitesse (V) d'au moins 40 km/h, de préférence d'au moins 45 km/h, de façon particulièrement préférée d'au moins 50 km/h.

14. Récepteur radio à courte portée (10) comprenant
un module de communication (13) pour Wireless M-Bus avec une antenne,
un module radio à courte portée (12), de préférence un module WPAN,
un processeur (14),
une mémoire (15) ainsi que
une source d'énergie (16), de préférence sous forme d'une pile ou d'un accumulateur, **caractérisée en ce que**
le récepteur radio à courte distance (10) est conçu de manière à pouvoir être utilisé conformément à un procédé selon au moins l'une des revendications précédentes.
